# EUROPÄISCHE PATENTSCHRIFT

(11) **EP 1 366 890 B1**
(45) Veröffentlichungstag und Bekanntmachung des Hinweises auf die Patenterteilung: **29.09.2004**
(21) Anmeldenummer: 02010925.2
(22) Anmeldetag: 16.05.2002
(51) Int. Cl.: B29C 65/16, B23K 26/073

(54) **Verfahren und Vorrichtung zum Verbinden von Kunststoffmaterialien mit hoher Schweissgeschwindigkeit**
Proces and apparatus for joining of synthetic materials at high welding speed
Procédé et appareil pour joindre des matières synthétiques par soudage à haute vitesse

(43) Veröffentlichungstag der Anmeldung: 03.12.2003
(73) Patentinhaber: Leister Process Technologies, 6060 Sarnen (CH)
(72) Erfinder: Jie-Wei Chen, CH-6055 Alpnach Dorf (CH); Adolf Niederberger, CH-6056 Kägiswil (CH)
(74) Vertreter: Klocke, Peter, Dipl.-Ing.

(56) Entgegenhaltungen:
- EP-A- 0 061 352
- EP-A- 0 126 787
- EP-A- 0 549 357
- EP-A- 1 087 429
- WO-A-01/43949
- DD-A- 84 474
- DE-A- 19 516 726
- SE-C- 510 621
- US-A- 2 579 063
- US-A- 4 237 363
- US-A- 5 279 693
- US-B1- 6 270 599
- PATENT ABSTRACTS OF JAPAN vol. 018, no. 396 (M-1644), 25. Juli 1994 (1994-07-25) -& JP 06 114943 A (MITSUBISHI HEAVY IND LTD), 26. April 1994 (1994-04-26)
- PATENT ABSTRACTS OF JAPAN vol. 007, no. 291 (M-265), 27. Dezember 1983 (1983-12-27) -& JP 58 163587 A (TOKYO SHIBAURA DENKI KK), 28. September 1983 (1983-09-28)

## Beschreibung

Die vorliegende Erfindung betrifft ein Verfahren und eine Vorrichtung zum Verbinden von Kunststoffmaterialien mit hoher Schweißgeschwindigkeit.

Es ist bekannt, Kunststoffmaterialien mittels Laserstrahlen zu verbinden, in dem das dem Laserstrahl zugewandte obere Material von diesem durchstrahlt und an der Kontaktfläche zwischen dem oberen für den Laserstrahl transparenten und dem unteren für den Laserstrahl undurchlässigen Material die beiden Materialien erwärmt und unter Druck miteinander verbunden werden. Das für den Laserstrahl transparente Material kann optisch im sichtbaren Wellenlängenbereich schwarz sein. Es ist außerdem bekannt, hierzu einen linienförmigen Laserstrahl zu erzeugen, wobei während des Schweißvorganges eine Relativbewegung zwischen den Materialien und dem Laserstrahl stattfindet, um die gewünschte Schweißkontur zu erzeugen.

Voraussetzung für den Schweißprozess gemäß dieser Durchstrahltechnik ist der Wärmeantwort des Kunststoffs unter IR-Bestrahlung. Der mit IR-absorbierenden Stoffen pigmentierte Kunststoff nimmt die Wärmeenergie aus der IR-Quelle (Laserquelle) unter Bestrahlung auf und erwärmt sich. Die Anhäufung der Wärmeenergie und damit erreichte Temperatur im Kunststoff sind abhängig von der Dosierungsweise der Energie, wie z. B. Energiedichte und Bestrahlungszeit. Außerdem ist auch die Materialeigenschaft, wie z. B. die Wärmeleitfähigkeit von Bedeutung. Der entscheidende Schritt für den Schweißprozess ist der Phasenübergang zwischen dem Festkörperzustand in den Verflüssigungszustand, der im nachfolgenden auch als Schmelztemperatur bezeichnet wird. Um diese Schmelztemperatur zu erreichen, wird aufgrund der niedrigen Wärmeleitfähigkeit des Kunststoffes eine gewisse Erwärmungszeit benötigt. Grundsätzlich ist es möglich, mit einer entsprechend höheren Energiedosis eine Verkürzung der Bestrahlungszeit zu realisieren. Diese Maßnahme verkleinert jedoch das Prozessfenster, in dem eine individuelle Anpassung der Prozessparameter möglich ist, und verschlechtert dadurch die Schweißqualität deutlich.

Endloses Folienmaterial kann beispielsweise als Teil eines mikromechanischen Bauteils, Sensoren, Aktuatoren etc., verwendet werden, wobei das Folienmaterial gleichzeitig auch als Transportmittel für das Bauteil ist. Auch kann endloses Folienmaterial zur Verpackung von derartigen auf einer Folie transportierten Bauteilen oder anderen zu verpackenden Gegenständen verwendet werden. Zur Herstellung von derartigen verschweißten Endlosfolien ist es wichtig, einen möglichst genauen aber auch schnellen Schweißvorgang zu realisieren.

In der DD 84 474 A wird eine Vorrichtung zum kontinuierlichen Schweißen von Thermoplastfolien beschrieben, bei der eine rotierende lichtdurchlässige Quarzglasscheibe auf welcher die zu verbindenden Folien überlappt verschweißt und mittels der Scheibe gleichzeitig transportiert werden, von der Gegenseite her von fokusierten Lichtstrahlen so durchstrahlt wird, dass der Brennfleck des Strahlenbündels eines Lichtstrahlers in der Schweißzone der zu verschweißenden Folien liegt. Dadurch werden die Folien auf Schweißtemperatur erwärmt und der zum Verschweißen erforderliche Druck wird durch eine federnd gelagerte Andrückrolle, die entweder mitläuft oder mit der rotierenden Scheibe entsprechend den Durchmesserverhältnissen synchron angetrieben wird, erzeugt. Mit dieser Vorrichtung erfolgt die Erwärmung punktuell.

Die DE 195 16 726 A1 offenbart ein Verfahren zum Formen und Verschließen einer Faltschachtel mit zwei gegenläufigen Rollen, wobei am Faltschachtelzuschnitt entlang der zu verschweißenden Bereiche jeweils eine thermoplastische Kunststoffschicht angebracht ist, die nach oder während eines Faltungsvorganges durch Einstrahlen von infraroter Strahlung und einer unmittelbar danach erfolgenden Druckaufbringung miteinander verschweißt werden.

Der vorliegenden Erfindung liegt daher die Aufgabe zugrunde, eine Möglichkeit vorzuschlagen, mit der Folien mit hoher Schweißgeschwindigkeit verbunden werden können.

Diese Aufgabe wird erfindungsgemäß durch die Merkmale des Verfahrensanspruchs und des Vorrichtungsanspruchs gelöst. Weitere vorteilhafte Ausgestaltungen sind den jeweiligen Unteransprüchen zu entnehmen.

Gemäß dem Verfahren wird zur Erzeugung einer in Längsrichtung verlaufenden Schweißnaht eine Prozesszone vorgesehen, in der das Material mittels Laserstrahlen kontinuierlich in einer Vorerwärmungszone auf die Schmelztemperatur erwärmt und anschließend in eine Schmelzzone aufgeschmolzen wird. Die dritte Phase der Prozesszone, nämlich die Abkühlungsphase, wird nicht von dem Laserstrahl überdeckt. Gemäß der Erfindung wird die gewünschte höhere Schweißgeschwindigkeit durch eine Anpassung der Dimension des von dem Laserstrahl überdeckten Bereiches realisiert. Es wird hierzu eine verlängerte Prozesszone entlang der Bewegungsrichtung vorgesehen, die automatisch die Bestrahlungszeit verlängert und damit eine hohe Schweißgeschwindigkeit bei trotzdem vernünftiger Schweißqualität erlaubt. Eine Erhöhung der Schweißgeschwindigkeit kann somit durch Verlängerung der Prozesszone erreicht werden. Hierzu ist erforderlich, dass eine besondere Strahlungsform des Laserstrahls realisiert wird, der sowohl den Schmelzprozess als auch den Vorerwärmungsprozess in einem kompakten Prozessvorgang simultan zulässt. Ein in dem Laserstrahl integrierter Vorwärmungsprozess (-zone) für den Kunststoff ist ein wesentliches Merkmal für die mögliche realisierbare hohe Schweißgeschwindigkeit.

Hierzu wird eine linienförmige Prozesszone vorgesehen. Diese wird vorzugsweise zumindest teilweise mittels eines kollimierten Laserstrahls erzeugt, der in seiner Breite durch entsprechende Optik einstellbar ist. In vertikaler Richtung ist die Form der Laserlinie von dem Abstand der Kontaktfläche zu der Laseroptik unabhängig.

Bei dem Verfahren ist es wichtig, dass der in der Bewegungsrichtung ausgerichtete linienförmige Laserstrahl in der gesamten Prozesszone auf die Kontaktfläche trifft. Der Auflageuntergrund muss daher zumindest eine dieser Länge entsprechenden Bereich vorsehen.

Um nach Erreichen der Schmelztemperatur zusätzliche Energie für den Schweißvorgang bereit zu stellen, ist es gemäß einer weiteren Ausbildung des Verfahrens möglich, im Anschluss an die linienförmige Bestrahlungszone einen weiteren punktförmigen Laserstrahl mit hoher Energiedichte vorzusehen.

Zur Temperaturmessung kann an dieser Stelle auch ein Pyrometer zur IR-Messung der Temperatur vorgesehen werden, wobei sowohl für die Breitstellung des punktförmigen Laserstrahls als auch für die IR-Messung die gleiche Optik für die Strahlführung verwendet werden kann. Durch diese Messung kann die Schmelzzone beobachtet und die Laserleistung entsprechend geregelt werden.

Die Materialien werden durch zwei gegenläufige gegeneinander pressenden Rollen geführt, wobei der Laserstrahl durch eine erste für den Laserstrahl durchlässige Rolle in die Bestrahlungszone gebracht wird. Damit kann der entsprechende Vorschub der Folien gewährleistet werden. Wichtig ist dabei, dass, wie vorstehend erwähnt, die Kontaktfläche von dem linienförmigen Laserstrahl erfasst wird. Dies bedeutet, dass die erste Rolle einen entsprechenden großen Durchmesser aufweist. Gleichzeitig wird die zweite Rolle derart ausgebildet, dass sie sich an dem Außenumfang leicht deformiert und infolgedessen eine gewünschte lange Prozesszone zur Verfügung stellt, da der Kontaktbereich zwischen den beiden Rollen sich nicht auf nur eine quer zur Transportrichtung liegenden Linie, wie sonst üblich, beschränkt.

Des Weiteren ist es für das Verfahren, wie eingangs angegeben, wichtig, dass die Materialien unter Druck miteinander verbunden werden. Die Materialien werden bereits im Bereich der Bestrahlungszone zusammen gepresst.

Durch die Deformation der zweiten Rolle werden die beiden zu verbindenden Materialien direkt beim Verschmelzen mit entsprechendem Druck zusammen gedrückt. Die Deformation der zweiten Rolle bewirkt auch zwangsläufig eine Krümmung der beiden verbundenen Materialien entsprechend dem Radius der ersten transparenten Rolle. Infolgedessen ist es notwendig, dass die verbundenen Materialien anschließend in dieser beim Verschweißen eintretenden Krümmungsrichtung aufgerollt werden. Ein gegenläufiges Aufrollen wirkt sich schädlich auf die Schweißverbindung bzw. die miteinander verbundenen Materialien aus. Bei einer ersten Rolle mit sehr großem Radius wird der Krümmungseffekt minimiert.

Die transparente Rolle kann beispielsweise aus Glas, transparentem Kunststoff, z.B. PMMA, oder anderen geeigneten Materialien sein. Um einen Laserstrahl mit gewünschter Breite in der Kontaktfläche vorzusehen, kann entweder durch entsprechende Optik ein Strahl in der gewünschten Breite erzeugt werden, oder durch entsprechendes hin- und her Scannen mit ausreichender Geschwindigkeit eine Bestrahlungszone erzeugt werden, die breiter ist als die Laserlinie. Um den Laserstrahl durch die erste Rolle auf die Materialien zu bringen kann eine entsprechende Laserquelle in der Rolle angeordnet werden. Vorzugsweise wird diese jedoch außerhalb der Rolle angeordnet und durch entsprechende Umlenkeinrichtungen in der Rolle der Laserstrahl in den gewünschten Bereich gebracht.

Gemäß einer weiteren Ausbildung des Verfahrens wird die erste transparente Rolle vor der Kontaktierung der Materialien auf der äußeren Oberfläche gereinigt, um daran anhaftende Schmutzpartikel, die von den Materialien stammen, zu entfernen, damit die für den Schweißvorgang erforderliche Energieübertragung durch die Rolle nicht beeinträchtigt wird. Dies kann beispielsweise durch entsprechend geeignete Bürsten mechanisch und/oder durch Druckluft oder Vakuum, elektrisch (antistatische Beschichtung) oder sonst in einer für den jeweiligen Anwendungsfall geeigneten Art und Weise erfolgen.

Ein weiterer Parameter, der für eine optimale Verbindung wichtig ist, ist die Aufbringung des erforderlichen Druckes. Um diesen zu kontrollieren, kann der Anpressdruck mittels auf der Oberfläche der zweiten Rolle angeordneten flächigen Drucksensoren, die allgemein bekannt und handelsüblich sind, ermittelt werden. Die von den Drucksensoren gelieferten Werte werden in einer entsprechenden damit verbundenen Regel- und Steuereinheit ausgewertet und eine der Rollen, vorzugsweise die deformierbare Rolle, entsprechend verstellt.

Um eine Schweißkontur zu erzeugen, die von einer normalen Linienform abweicht, ist es möglich, auf der transparenten Rolle eine Maske anzuordnen. Je nach Strahlqualität, kann diese Maske innen oder außen angeordnet sein. Ein typisches Beispiel für die Anordnung einer Maske derart, dass sie bei der Drehung der Rolle einen gewissen Bereich des zu verschweißenden Materials abdeckt, ist die Herstellung einer in Transportrichtung kontinuierlich unterbrochenen Schweißnaht.

Die Vorrichtung zum Verbinden von Endlosmaterialien umfasst zwei gegenläufig gegeneinander pressende Rollen, wobei die erste Rolle aus einem laserstrahldurchlässigen Material und rohrförmig ausgebildet ist, und die zweite Gegenrolle aus einem an der Oberfläche leicht deformierbaren Material hergestellt ist. Des Weiteren sind in der ersten Rolle Einrichtungen zum Erzeugen mindestens eines Laserstrahls an der Kontaktfläche angeordnet. Bei diesen Einrichtungen kann es sich um den Laserstrahl generierenden Einrichtungen als auch um umlenkende Einrichtungen handeln, die den außerhalb der Rolle generierten Laserstrahl an die gewünschte Position bringen. Die am Außenumfang leicht deformierbare Rolle ist zumindest in dem äußeren Bereich aus einem mit entsprechender Weichheit hergestellten gummielastischen Material.

Gemäß einer bevorzugten Ausbildung ist in der ersten Rolle eine Einrichtung zur IR-Messung der Temperatur angeordnet, die vorzugsweise hinsichtlich des Messpunktes beweglich ausgebildet ist. Dies erlaubt die Überprüfung der gewünschten Prozessphase und die entsprechende Auswertung in einer Steuerund Regeleinrichtung.

Die Einrichtungen zur Erzeugung mindestens eines Laserstrahls erzeugen einen in Bewegungsrichtung der Materialien angeordneten Laserstrahl in der Kontaktzone. Vorzugsweise kann zusätzlich ein daran anschließender in Bewegungsrichtung nach dem linienförmigen Laserstrahl angeordneter punktförmiger Laserstrahl vorgesehen sein.

Nachfolgend wird die Erfindung anhand der begleitenden Zeichnungen näher erläutert. Es stellen dar:
- Figur 1: die schematische Darstellung des Temperaturprofils anhand eines linienförmigen, vorhangartigen Laserstrahls auf eine Oberfläche;
- Figur 2: die schematische Darstellung einer Anordnung mit einem linienförmigen Laserstrahl und einem in Bewegungsrichtung darauf folgenden Punktlaser oder Pyrometer zur Temperaturmessung;
- Figur 3: die schematische Darstellung einer Vorrichtung zum Verbinden von zwei Kunststofffolienbahnen; und
- Figur 4: eine schematische vergrößerte Darstellung der transparenten Rolle und der Gegenrolle mit einem Umlenkspiegel.

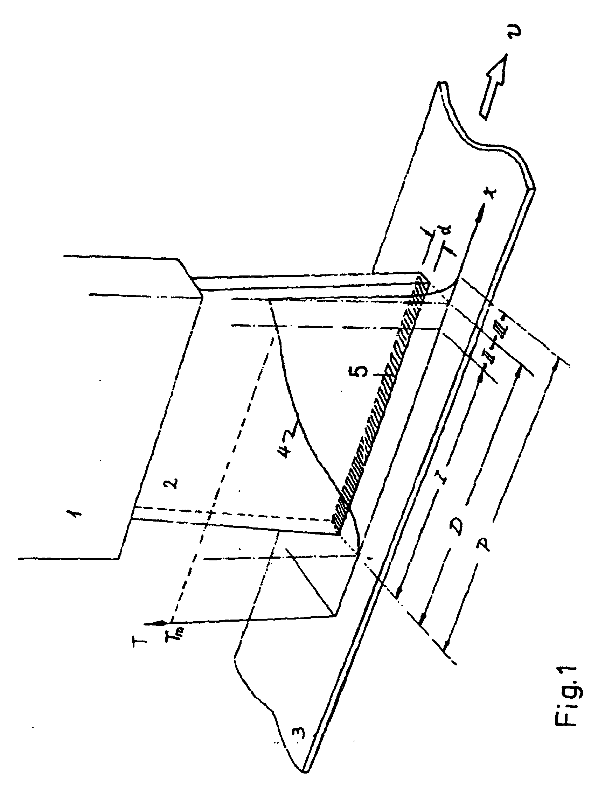

Figur 1 zeigt eine Laserquelle 1 mit einem vorhangartigen kollimierten Laserstrahl 2, der auf dem Kunststoffmaterial 3 eine linienförmige Bestrahlungszone 5 erzeugt. Die Bestrahlungszone 5 hat eine durch die entsprechende Optik beeinflussbare Breite d und eine Länge D. Das Kunststoffmaterial 3 wird in Pfeilrichtung mit der Geschwindigkeit v bewegt. In der Figur ist außerdem noch das Temperaturprofil 4 mit der Temperatur T über den Weg x dargestellt. Wie aus der Figur und der Linie 4 ersichtlich, steigt die Temperatur in dem Material in der Vorerwärmungszone I kontinuierlich an und erreicht am Ende die Schmelztemperatur Tm. Von da an beginnt die Schmelzzone II bis zum Ende der Strahlungszone 5, deren Länge mit D bezeichnet ist. Danach fällt die Temperatur in der Abkühlungszone III ab. Die gesamte Dauer des Schweißprozesses ist mit P bezeichnet.

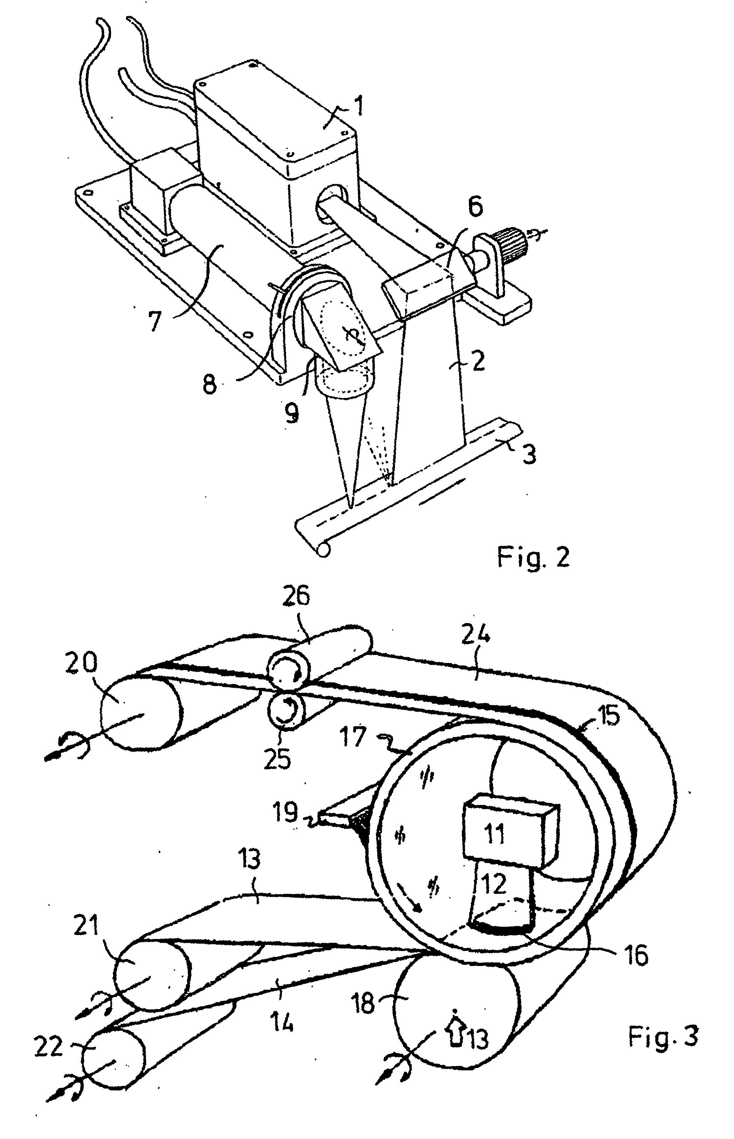

In der Figur 2 ist beispielhaft für die prinzipielle Erklärung eine Anordnung dargestellt, die den vorhangartigen Laserstrahl 2 gemäß der Figur 1 zeigt, der auf ein in Pfeilrichtung bewegtes Material 3, beispielsweise Folie, trifft. Der von der Laserquelle 1 erzeugte Laserstrahl wird mittels einer Umlenkeinrichtung 6, die eine entsprechende Bewegung auch quer zur Bewegungsrichtung des Materials 3 ermöglicht, umgelenkt. Neben der Laserquelle 1 kann entweder eine weitere Laserquelle 7, und/oder ein Pyrometer zur IR-Messung angeordnet sein. Diese Einrichtung weist einen drehbaren Kopf 8 auf, der eine frei definierbare Bewegung entlang des Materials erlaubt, so dass hier, je nach Einsatz eine punktuelle Zusatzerwärmung oder entsprechende Temperaturmessung möglich ist, ohne dass die optischen Elemente 9 ausgetauscht werden müssen. Mit dem entsprechenden Pyrometer kann die Temperaturmessung an jeder beliebigen Stelle entlang der Schweißlinie durchgeführt werden. Der Einsatz von Punktlaser und Pyrometer kann auch durch den Aufbau neben der Linienquelle integriert werden, nämlich indem der Punktlaser durch die Optik in das Material und die Wärmestrahlung über den gleichen optischen Weg gesammelt und in das Pyrometer eingeleitet wird.

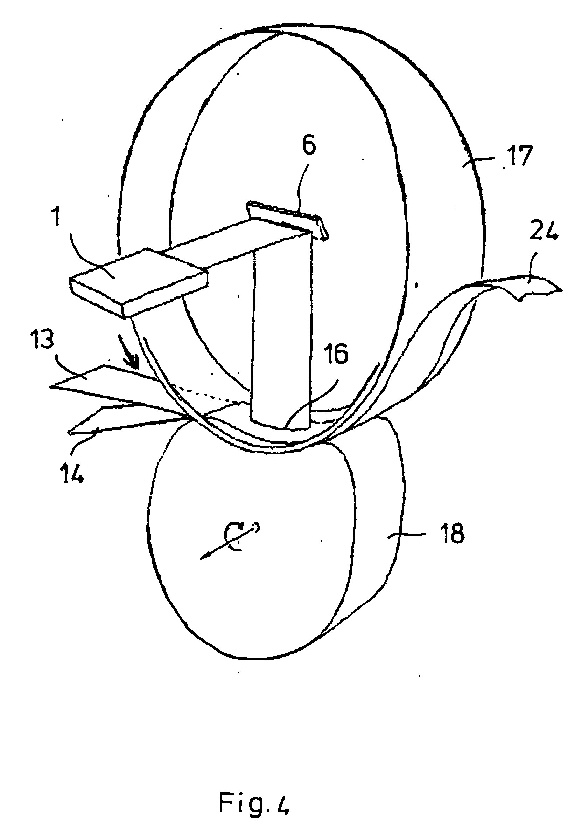

Figur 3 zeigt die schematische Anordnung der einzelnen Elemente in einer Vorrichtung. In der Figur ist schematisch eine Laserquelle 11 in einer transparenten Rolle 17 dargestellt. Dies ist lediglich aus exemplarischen Gründen erfolgt, da hier grundsätzlich, und in der Praxis auch besser realisierbar, ein Umlenkspiegel 6, wie in Figur 4 gezeigt, verwendet wird. Die Laserquelle 11 erzeugt einen vorhangartigen Laserstrahl 12, der in dem Bereich 16 zwischen der transparenten Rolle 17 beispielsweise aus Quarzglas oder PMMA, und der leicht deformierbaren Rolle 18, beispielsweise aus gummielastischem Material, eine linienförmige Bestrahlungszone erzeugt. Das folienartige Material 13, 14 wird von den Rollen 21 bzw. 22 abgerollt und zwischen den beiden gegenläufigen passiven Rollen 17 und 18 hindurchgeführt. Der Vorschub des Materials erfolgt über die Antriebsrollen 25 und 26. Die leicht deformierbare Gegenrolle 18 ist, wie durch den Pfeil 13 dargestellt, hinsichtlich des Anpressdruckes regulierbar. Die miteinander verbundenen Folien 13, 14 werden zwischen den beiden Rollen 17, 18 leicht entsprechend der Krümmung der Rolle 17 gebogen. Infolgedessen werden die miteinander verbundenen Folien 24 mit der Schweißnaht 15 im weiteren Verlauf um die Rolle 17 geführt und mit der gleichen Krümmung auf die Aufwickelrolle 20 aufgerollt. Wie aus der Figur ersichtlich, wird durch die Deformation der Gegenrolle 18 erreicht, dass eine entsprechend lange Anpressfläche zur Verfügung steht, die länger ist, als die Bestrahlungszone 16.

In dem Ausführungsbeispiel werden zwei Materialien miteinander verbunden. Grundsätzlich ist auch möglich, drei Materialien miteinander zu verbinden, wobei die an der Kontaktfläche erzeugte Wärme auf die dritte Folie übertragen wird, wenn das mittlere Material ausreichend dünn ist.

In der Figur ist außerdem mit 19 eine Reinigungseinrichtung in Form einer Bürste schematisch angedeutet. Des Weiteren können, in der Figur nicht dargestellt, jedoch für den Fachmann leicht verständlich und realisierbar, eine oder mehrere Masken in der Rolle 17 vorgesehen sein, um der Schweißnaht 15 eine bestimmte Kontur zu geben. Außerdem können am Außenumfang der zweiten Rolle 18 flächige, nicht dargestellte Drucksensoren vorgesehen sein, über die der Anpressdruck kontrolliert werden kann. Es ist auch möglich, die Rolle 18 mit einer gummielastischen Ummantelung zu versehen und die Sensoren unter der Ummantelung anzubringen.

Mit einer derartigen Vorrichtung kann bei einer Laserleistung von 70 W mit einer 15 mm langen Schweißlinie eine Schweißgeschwindigkeit von 400 mm pro Sekunde erreicht werden. Bei einer punktförmigen Schweißung oder mit einem Laserstrahl quer zur Bewegungsrichtung mit gleicher Breite (1 mm) verläuft der Schweißprozess 15 mal langsamer.

Die Figur 4 zeigt noch einmal vergrößert die transparente Rolle 17 und die leicht verformbare Rolle 18, wobei in der Rolle 17 ein Umlenkspiegel 6 angeordnet ist, der den von der Lichtquelle kommenden Laserstrahl auf die Linie 16 umlenkt.

## Patentansprüche

1. Verfahren zum Verbinden von endlosen Kunststoffmaterialien (13, 14), bei denen mittels eines Laserstrahls (2, 12) das obere Material (13) von dem Laserstrahl (2, 12) durchstrahlt und an der Kontaktfläche zwischen dem oberen transparenten und dem unteren für den Laserstrahl undurchlässigen Material (14), die beide Materialien (13, 14) aufgeschmolzen und unter Druck miteinander verbunden werden, wobei der Laserstrahl (2, 12) und die zu verbindenden Materialien (13, 14) relativ zueinander bewegt werden, wobei zur Erzeugung einer in Längsrichtung verlaufenden Schweißnaht an der Kontaktfläche eine Prozesszone (P) vorgesehen wird, in der das Material mittels Laserstrahlen kontinuierlich in einer Vorerwärmungszone (I) auf die Schmelztemperatur (Tm) erwärmt und anschließend in einer Schmelzzone (II) aufgeschmolzen wird und die Materialien bereits im Bereich der Bestrahlungszone (D) des Laserstrahls (2, 12) zusammengepresst werden, **dadurch gekennzeichnet, dass** die Materialien durch zwei gegenläufige gegeneinander pressende Rollen (17, 18) geführt werden, wobei der Laserstrahl (2, 12) durch eine erste für den Laserstrahl durchlässige Rolle (17) in die Bestrahlungszone gebracht wird, dort eine linienförmige Prozesszone (P) erzeugt und die zweite Rolle (18) von der ersten Rolle (17) am Umfang leicht deformiert wird.

2. Verfahren nach Anspruch 1, **dadurch gekennzeichnet, dass** die linienförmige Prozesszone (P) zumindest teilweise mittels eines vorhangartigen kollimierten Laserstrahls (2, 12) erzeugt wird.

3. Verfahren nach Anspruch 2, **dadurch gekennzeichnet, dass** in der Schmelzzone (II) zusätzlich ein nachfolgender punktförmiger Laserstrahl vorgesehen wird.

4. Verfahren nach einem der vorangegangenen Ansprüche, **dadurch gekennzeichnet, dass** die verbundenen Materialien anschließend in der der ersten Rolle (17) entsprechenden Krümmungsrichtung aufgerollt werden.

5. Verfahren nach einem der vorangegangenen Ansprüche, **dadurch gekennzeichnet, dass** die erste Rolle (17) vor der Kontaktierung der Materialien auf der äußeren Oberfläche gereinigt wird.

6. Verfahren nach einem der vorangegangenen Ansprüche, **dadurch gekennzeichnet, dass** mittels einer Maske in der ersten Rolle die Schweißstruktur beeinflusst wird.

7. Verfahren nach einem der vorangegangenen Ansprüche, **dadurch gekennzeichnet, dass** der Anpressdruck mittels auf oder im Bereich der Oberfläche der zweiten Rolle (18) angeordneten Drucksensoren ermittelt wird.

8. Verfahren nach einem der vorangegangenen Ansprüche, **dadurch gekennzeichnet, dass** nach der Prozesszone (P) die Temperatur mittels eines Pyrometers gemessen wird.

9. Vorrichtung zum Verbinden von Kunststoffmaterialien mittels eines Laserstrahls (12), der das obere Material (13) aufgrund seiner Transparenz durchstrahlt und an der Kontaktfläche mit dem unteren, den Laserstrahl absorbierenden Material (14), die Materialien erwärmt und aufschmilzt, und eine Einrichtung zum Zusammenpressen der Materialien, **dadurch gekennzeichnet, dass** zum Verbinden von Endlosmaterialien diese durch zwei gegenläufige gegeneinander pressende Rollen (17, 18) geführt werden, wobei die erste Rolle (17) aus einem laserstrahldurchlässigen Material und rohrförmig ausgebildet ist, und die zweite Rolle (18) aus einem an der Oberfläche leicht deformierbaren Material ausgebildet ist, und in der ersten Rolle (17) Einrichtungen (11) zur Erzeugung eines linienförmigen in Bewegungsrichtung der Materialien angeordneten Laserstrahls (12) in der Kontaktzone angeordnet sind.

10. Vorrichtung nach Anspruch 9, **dadurch gekennzeichnet, dass** in der ersten Rolle (17) eine Einrichtung (7) zur IR-Messung der Temperatur angeordnet ist, die vorzugsweise hinsichtlich des Messpunktes beweglich ausgebildet ist.

11. Vorrichtung nach Anspruch 10, **dadurch gekennzeichnet, dass** die Einrichtungen (11) einen punktförmigen Laserstrahl in Bewegungsrichtung nach dem linienförmigen Laserstrahl in der Kontaktzone erzeugen.

12. Vorrichtung nach einem der vorangegangenen Ansprüche 9-11, **gekennzeichnet durch** eine Reinigungseinrichtung (19) am Außenumfang der ersten Rolle (17).

## Claims

1. A process for joining endless polymer materials (13,14), in which by means of a laser beam (2,12) the upper material (13) is shone through by the laser beam (2,12) and, at the contact surface between the upper material (14), which is transparent to the laser beam, and the lower material, which is opaque to the laser beam, the two materials (13, 14) are melted and joined to each other under pressure, the laser beam (2,12) and the materials to be joined being moved relative to each other, wherein in order to produce a welded seam running in the longitudinal direction at the contact surface, a process zone (P) is provided, in which the material is heated continuously to the melting temperature (Tm) in a preheating zone (I) by means of laser beams and is subsequently melted in a melting zone (II), and wherein the materials are already pressed together in the area of the irradiation zone (D) of the laser beam (2,12), **characterized in that** the materials are guided through two contrarotating rollers (17, 18) that press against each other, the laser beam (2, 12) being brought into the irradiation zone by a first roller (17) that is transparent to the laser beam, there a linear process zone (P) is provided, and the second roller (18) is slightly deformed at the circumference by the first roller (17).

2. The process as claimed in claim 1, **characterized in that** the linear process zone (P) is produced, at least partly, by means of a curtain-like collimated laser beam (2).

3. The process as claimed in claim 2, **characterized in that** a following point-like laser beam is additionally provided in the melting zone (II).

4. The process as claimed in one of the preceding claims, **characterized in that** the joined materials are subsequently rolled up in the direction of curvature corresponding to the first roller (17).

5. The process as claimed in one of the preceding claims, **characterized in that** the first roller (17) is cleaned on the outer surface before making contact with the materials.

6. The process as claimed in one of the preceding claims, **characterized in that** the welding structure is influenced by means of a mask in the first roller.

7. The process as claimed in one of the preceding claims, **characterized in that** the contact pressure is determined by means of pressure sensors arranged on or in the area of the surface of the second roller (18).

8. The process as claimed in one of the preceding claims, **characterized in that** the temperature is measured by means of a pyrometer after the process zone (P).

9. An apparatus for joining polymer materials by means of a laser beam (12), which shines through the upper material (13) on account of the transparency of the latter and, at the contact surface with the lower material and a device for pressing the materials together, **characterized in that** in order to join endless materials, the latter are guided through two contrarotating rollers (17, 18) that press against each other, the first roller (17) being constructed from a material that is transparent to a laser beam and is tubular, and the second roller (18) being constructed from a material that can be deformed easily at the surface, and devices (11) for producing at least one linear laser beam (12) which is arranged in the direction of movement of the materials in the contact zone being arranged in the first roller (17).

10. The apparatus as claimed in claim 9, **characterized in that** a device (7) for the IR measurement of the temperature is arranged in the first roller (17), and is preferably designed such that it can be moved with regard to the measurement point.

11. The apparatus as claimed in claim 13, **characterized in that** the devices (11) produce a point-like laser beam after the linear laser beam in the direction of movement in the contact zone.

12. The apparatus as claimed in one of the preceding claims 9-11, **characterized by** a cleaning device (19) on the outer circumference of the first roller (17).

## Revendications

1. Procédé pour assembler des matériaux en matière synthétique sans fin (13, 14) au moyen d'un rayon laser (2, 12), dans lequel le matériau supérieur (13) est traversé par le rayon laser (2, 12) et les deux matériaux (13, 14) sont fondus à la surface de contact entre le matériau supérieur transparent et le matériau inférieur (14) opaque au rayon laser et assemblés ensemble sous pression, dans lequel le rayon laser (2, 12) et les matériaux à assembler (13, 14) sont déplacés l'un par rapport à l'autre, dans lequel il est prévu, pour générer une soudure s'étendant en direction longitudinale à la surface de contact, une zone de procédé (P) dans laquelle le matériau est porté de manière continue à la température de fusion (Tm) au moyen de rayons laser dans une zone de préchauffage (I) puis fondu dans une zone de fusion (II) et les matériaux sont déjà pressés l'un contre l'autre au niveau de la zone de rayonnement (D) du rayon laser (2, 12), **caractérisé par le fait que** les matériaux sont guidés par deux rouleaux (17, 18) appliqués l'un contre l'autre, tournant en sens contraire, le rayon laser (2, 12) étant amené dans la zone de rayonnement par un premier rouleau (17) transparent au rayon laser, y générant une zone de procédé linéaire (P), et le deuxième rouleau (18) étant légèrement déformé sur sa circonférence par le premier rouleau (17).

2. Procédé selon la revendication 1, **caractérisé par le fait que** la zone de procédé linéaire (P) est au moins partiellement générée au moyen d'un rayon laser (2, 12) collimaté en rideau.

3. Procédé selon la revendication 2, **caractérisé par le fait qu'**il est prévu en plus dans la zone de fusion (II) un rayon laser ponctuel suivant le premier.

4. Procédé selon l'une des revendications précédentes, **caractérisé par le fait que** les matériaux assemblés sont ensuite enroulés dans le sens de courbure correspondant au premier rouleau (17).

5. Procédé selon l'une des revendications précédentes, **caractérisé par le fait que** le premier rouleau (17) est nettoyé sur sa surface extérieure avant d'entrer en contact avec les matériaux.

6. Procédé selon l'une des revendications précédentes, **caractérisé par le fait que** l'on influence la structure de soudage au moyen d'un masque dans le premier rouleau.

7. Procédé selon l'une des revendications précédentes, **caractérisé par le fait que** l'on détermine la pression d'application au moyen de capteurs de pression disposés sur ou à proximité de la surface du deuxième rouleau (18).

8. Procédé selon l'une des revendications précédentes, **caractérisé par le fait que** l'on mesure la température après la zone de procédé (P) au moyen d'un pyromètre.

9. Dispositif pour assembler des matériaux en matière synthétique au moyen d'un rayon laser (12) qui traverse le matériau supérieur (13) en raison de sa transparence et, à la surface de contact avec le matériau inférieur (14) absorbant le rayon laser, réchauffe et fait fondre les matériaux, et d'un dispositif pour presser les matériaux l'un contre l'autre, **caractérisé par le fait que** pour assembler des matériaux sans fin, ceux-ci sont guidés par deux rouleaux (17, 18) appliqués l'un contre l'autre, tournant en sens contraire, le premier rouleau (17) étant réalisé dans un matériau transparent au rayon laser et en forme de tube, le deuxième rouleau (18) étant réalisé dans un matériau légèrement déformable à la surface et des dispositifs (11) étant disposés dans le premier rouleau (17) pour générer dans la zone de contact un rayon laser (12) linéaire dans la sens de déplacement des matériaux.

10. Dispositif selon la revendication 9, **caractérisé par le fait qu'**un dispositif (7) pour la mesure IR de la température, de préférence mobile par rapport au point de mesure, est disposé dans le premier rouleau (17).

11. Dispositif selon la revendication 9, **caractérisé par le fait que** les dispositifs (11) génèrent dans la zone de contact un rayon laser ponctuel après le rayon laser linéaire dans le sens de déplacement.

12. Dispositif selon l'une des revendications précédentes 9 à 11, **caractérisé par** un dispositif de nettoyage (19) sur la circonférence extérieure du premier rouleau (17).
